# EUROPEAN PATENT SPECIFICATION

(11) **EP 2 809 177 B1**
(45) Date of publication and mention of the grant of the patent: **25.07.2018**
(21) Application number: 13707421.7
(22) Date of filing: 31.01.2013
(51) Int. Cl.: A23K 40/00, A23K 40/10, A23K 20/147, A23K 20/142, A23K 20/158, A23K 20/163, A23K 50/10, A23K 20/10

(54) **RUMINANT FEED ENHANCING ENERGY METABOLISM IN MILK PRODUCTION**
FUTTER FÜR VERBESSERTEN ENERGIESTOFFWECHSEL BEI DER MILCHPRODUKTION
ALIMENT AUGMENTANT LE MÉTABOLISME ÉNERGÉTIQUE DANS LA PRODUCTION DE LAIT

(30) Priority: 31.01.2012 FI 20120031; 20.06.2012 EP 12397519
(43) Date of publication of application: 10.12.2014
(73) Proprietor: Benemilk Ltd, 21200 Raisio (FI)
(72) Inventor: HOLMA, Merja, FI-21200 Raisio (FI)
(74) Representative: Seppo Laine Oy
(86) International application number: PCT/FI2013/000005
(87) International publication number: WO 2013/113982

(56) References cited:
- WO-A1-96/41543
- WO-A1-2006/085774
- US-A- 5 093 128
- MOSLEY S A ET AL: "Effect of Varying Levels of Fatty Acids from Palm Oil on Feed Intake and Milk Production in Holstein Cows", JOURNAL OF DAIRY SCIENCE, AMERICAN DAIRY SCIENCE ASSOCIATION, US, vol. 90, no. 2, 1 February 2007 (2007-02-01), pages 987-993, XP026955752, ISSN: 0022-0302 [retrieved on 2007-02-01]
- J. T. MULLINIKS ET AL: "Protein and glucogenic precursor supplementation: A nutritional strategy to increase reproductive and economic output", JOURNAL OF ANIMAL SCIENCE, vol. 89, no. 10, 27 May 2011 (2011-05-27), pages 3334-3343, XP055066014, ISSN: 0021-8812, DOI: 10.2527/jas.2010-3286

## Description

The present invention relates to a ruminant feed which has a relatively high total fat percentage and which contains inside and on the surface of feed raw material particles a fatty acid mixture rich in saturated free fatty acids. The invention is also directed to a process for preparing said feed and to a method for increasing milk production of a lactating animal and for increasing concentrations of protein and fat in milk.

### Background

Although there has been a threefold increase in milk production of cows during the last decades, the degree of utilization of feed has not improved. The same amount of energy intake per kilogram of milk is still needed as tens of years ago.

WO 2006/085774 describes a starch containing ruminant feed comprising amylose lipid complexes. The aim is to improve the health of the animal by reducing the rate of degradation of starch in rumen. The invention also concerns a method for altering the bioavailability of starch for amylose enzyme.

In a study by Mosley S.A. et al. (J. Dairy Sci. 90:987-993) a ruminant TMR diet was supplemented with three levels of palm oil fatty acids. Milk protein content (protein percentage) did not increase, but it tended to decrease linearly (P<0.08) with palm oil supplement, even though the energy intake of the cows was increased in the test groups receiving the palm oil supplement.

WO2007/048369 describes a supplement to animal feeds comprising at least one fat which is solid at room temperature and at least one starch. The supplement is produced by homogenizing (at 120-170 bar) melted fat with the starchy material at elevated temperatures, cooling and pulverizing. The fat content of the powder is very high.

US 4877621 describes a composition for coating a biologically active substance, and granules comprising a nucleous containing the biologically active substance coated with the composition, used as feedstuff additives to ruminants. The purpose is to protect the biologically active substance from degradation in rumen. The coating is carried out by a fluidized bed technique in organic solvents. The coating composition consists a basic amino copolymer and a hydrophobic substance, which is preferably stearic acid. Stearic acid with purity greater than 90 % is of very particular value, and it is shown that technical grade stearic acid, containing e.g. 47 % palmitic acid, does not provide the desired effects.

EP 0479555 describes extruded animal feed nuggets comprising at least 20 wt% starch and at least 15 wt% added fat. The nuggets increased the milk yield of cows, but at the same time decreased both the fat content (%) and protein content (%) of the milk.

WO 2010/151620 describes extruded feed particles that have been vacuum coated with a high amount of two different fats: first a low melting point fat and then a high melting point fat that encloses the low melting point fat.

WO 2010/108483 describes a method for producing animal food by means of fat extrusion, wherein heated fat is sparayed and cooled so that particles are formed with at least one additive or component, such as selenium. The fat content of the product is high, 30-99.5 % and the additive or component is embedded in the fat. The goal is to protect sensitive additives or components in rumen.

FR2880518 describes a feed supplement of 5-70 % digestible sugars in vegetable oil or hydrogenated fats. The aim is to deliver glucose to the cow against ketosis.

Rumen protected fat supplements have been developed and are marketed e.g. by trade names Lipitec Bovi HF and Energizer RP10.

US 5182126 describes a feed supplement containing C14-C22 fatty acid alkaline earth metal salts and a propionate glucogenous ingredient as essential constituents. In addition, the product may contain C14-C22 fatty acid glycerides.

WO 2007/149818 describes a rumen bypass supplement in compacted particulate form comprising a core of fatty acid alkaline earth metal salt and amino acid. On the central core surface of the pellets, a liquid fatty acid coating and a basic inorganic reagent, such as calcium hydroxide, are added. These constitute a reactive matrix, which is transformed in situ into a interlocking network of polyvalent fatty acid salts.

WO 2011/014069 discloses a formulation for lactating animals, based on a conventional roughage comprising native and rumen-protected fat comprising omega-3 fatty acids.

US 2012/0093974 discloses a ruminant feed composition having a granulated core comprising at least one active substance and at least one layer of coating material surrounding the core. The coating material comprises one or more linear saturated aliphatic monocarboxylic acids. The active substance may be for example amino acids, vitamins or hormones.

### Effects of the invention

The feed according to the invention improves the energy efficiency in milk production of a ruminant. When the utilization of energy becomes more effective, milk production increases and the concentrations of protein and fat in the milk rise. Especially, the feed enhances fat synthesis in the mammary gland by bringing milk fat components to the cell and therefore the energy consuming synthesis in the mammary gland is not necessary. Thus glucose can more efficiently be used for lactose production whereupon milk production increases. The milk protein content rises since there is no need to produce glucose from amino acids. The ruminant (e.g. cow) does not therefore lose weight at the beginning of the lactation season. Thus, the problem with low fertility also decreases.

The formation of milk in the mammary gland is a complex enzymatic process regulated by hormones, requiring lots of ATP energy at the cell level, as well as suitable starting materials and enzymes. The main components of milk, i.e. lactose, protein and fat, are synthesized in the cells of the udder. Glucose availability in the mammary gland has been regarded as the main limiting factor in milk production, in addition to the availability of some amino acids. The role of acetate as a starting material of *de novo* synthesis of milk fat is known. It is also known that acetate is of relevance as a source of energy. The importance of acetate in ruminants has now been recognized to be even greater than believed before. It has a unique role in the energy metabolism as part of ATP formation in the synthesis of all milk components.

### (1) Feeding of cows

Due to rumen, fiber indigestible to nonruminants, i.e. roughage, can be utilized in the feeding of cows. Typical roughages include hay, grass silage, corn silage, straw and pasture, as well as various whole grain/leguminous silages.

In efficient milk production ruminants are given in addition to roughages also concentrate feeds which comprise energy (i.e. carbohydrates and fat) and protein components, preferably also minerals, micronutrients and vitamins. In a typical Finnish ruminant diet the concentrate feed contains mainly grain feeds (oats, barley, wheat) and vegetable oilseed crushes or meal (rapeseed). In other parts of the world also corn is used as grain and soya is more common as protein feed (protein source) than rapeseed. A large variety of different byproducts from food industry are also used.

In general, the use of fat is reasonably small since the amount of added fat seldom exceeds 3 % of the diet. Some amounts of vegetable oils, fatty acid calcium salts and mixtures of mainly saturated fatty acids (stearic and palmitic) are added to the diet. The eligible iodine value is over 10 (e.g. 10-20), since fats having a low iodine value typically are poorly digestible. Most added fats have a much higher iodine value.

In the beginning of the lactation season when the cow loses weight, blood glucose increasing agents (i.e. glucose precursors), such as propylene glycol, glycerol, sodium propionate and combinations of any one of these can be given.

### (2) The effect of rumen on nutrients in the feed

Microbes in the rumen ferment carbohydrates of the feed to acetic acid, butyric acid and propionic acid, propionic acid being the most important precursor of glucose. These acids are absorbed through the rumen wall and transported to the liver wherein they are converted to useful nutrients. Acetate is consumed in the liver for producing energy. It can also be converted to longer fatty acids in the liver. These fatty acids may e.g. function as precursors to fat. Part of the acetate is transferred with the blood circulation to the mammary gland, where it can be used for the synthesis of ≤C16 fatty acids. Butyric acid can also be used as a precursor of milk fat.

Part of the protein in the feed degrades by means of microbes in the rumen to ammonia, part of which is absorbed through the rumen wall and is converted to urea in the liver. Another part of the protein is converted by microbes to microbial protein, which is then absorbed from the small intestine as amino acids. Still another part of the protein in the feed is transported directly to the small intestine and is absorbed as amino acids, such as the protected amino acids. In some occasions, high protein intake from the feed may lead to increased urea concentrations of milk, and does not thus necessarily increase milk protein content.

Fat in the feed is modified by the rumen and thus the milk fat profile is not the same as the profile of fat in the feed. All fats which are not completely inert in the rumen decrease feed intake and rumen digestibility of the feed material. Milk composition and fat quality can be influenced by the cows' diet. Oil feeding (e.g. vegetable oils) has negative effects on both rumen function and milk formation. The milk protein concentration is lowered, the fat concentration is decreased, the proportion of trans fatty acids is increased and the properties of the fat during industrial milk processing are weakened. Typical milk fat contains more than 70 % of saturated fatty acids. Almost one third of the milk fat is palmitic acid.

The detrimental effect of oil and fat feeding can be diminished by preventing triglyceride fat hydrolysis. Fat hydrolysis can be decreased for example by protecting fats with formaldehyde treated casein. Another alternative is to make insoluble fatty acid calcium salts whereby hydrogenation in rumen can be avoided. However, the disadvantages of fatty acid salts limit their usability in feeds. The pungent taste of the salts result in decreased feed intake. The salts may also disturb pelletizing process of the feed.

The nutrients obtained from the feed are metabolised in a number of ways before forming milk components. The saturated and unsaturated fatty acids in the feed that are transported to the small intestine are absorbed as micelles and are converted in the small intestine wall to triglycerides, phospholipides and lipoproteins. These are transported in the lympha past the liver to the blood circulation for the needs of e.g. muscles and the mammary gland. Thus the long fatty acids absorbed from the diet cannot cause fatty liver. Fatty liver arises when the cow loses weight which occurs when metabolising high amounts of saturated fatty acids from the muscles in the liver.

### (3) Cell energy is formed in the mitochondria

Mitochondria produce energy, adenosine triphosphate (ATP), for the needs of the whole cell metabolism system. Cells, also the cells of a mammary gland, contain dozens of mitochondria. Particularly the mammary gland and the heart muscle need high amounts of energy. Cell scientists have found that certain nutrient factors may enhance the mitochondrial function.

ATP is the energy form which the cell uses for various needs. The intermediate product in ATP formation is called active acetic acid (acetyl-CoA). The key measure in energy consumption is acetyl-CoA.

Acetyl-CoA is obtained from carbohydrates and fats and, in case of lack of energy, also from carbon chains of proteins which naturally is not economical. Acetyl-CoA is obtained from carbohydrates via the pyruvic acid pathway which is important for nonruminants but less significant in ruminants. The main source of acetyl-CoA in ruminants, in addition to the acetic acid formed in the rumen, is the β-oxidation of fatty acids. A ruminant does not use much glucose to produce acetyl-CoA. For that purpose acetate is used. The acetate is partly derived from β-oxidation of fatty acids wherein palmitic acid has a significant role.

It has now been noticed that palmitic acid from the feed is surprisingly suitable for producing acetic acid and further acetyl-CoA. When suitable enzymes and nutritional factors enhancing mitochondrial function are further present, the availability of energy from the mitochondria is flexible and follows the demand. In a way, palmitic acid is an good energetic preform wherefrom energy can "easily" taken into use.

### (4) The role of palmitic acid in the energy chain

Palmitic acid is an important source of energy. It is needed also in several cell functions and in functional molecules for several different tasks. Enzymes can synthesize palmitic acid e.g. in the liver and in the mammary gland. Different tissues obtain energy via β-oxidation of palmitic acid.

If the eight acetyl-CoA:s produced from palmitic acid are used for complete oxidation in the citric acid cycle, even 129 ATP molecules are obtained from one palmitic acid molecule. When the function of mitochondria is effective, lots of energy could be obtained from palmitic acid whenever needed.

### (5) The need of energy for the production of milk components

Lactose (a disaccharide of glucose and galactose) is the most important factor affecting the osmotic pressure of milk and thus lactose synthesis also regulates the amount of secreted milk. 80-85 % of the carbon of milk lactose is derived from glucose. Part of the carbon of galactose may be produced from acetate. Lactose is synthesized in the Golgi apparatus of the cells in the mammary gland and the process requires three ATP molecules for the formation of one lactose molecule. A sufficient supply of acetate may therefore save glucose for lactose production.

The amino acids needed for the synthesis of milk protein are partly obtained from the blood circulation. Non-essential amino acids can be synthesized in the mammary gland by utilizing the carbon C2 chain of acetate, but also this process requires ATP energy. Approximately 30 mmol ATP/1 g protein is needed in this protein synthesis.

The energy needed for the synthesis of milk fat varies depending on how the milk fat is formed. Part of the fatty acids are obtained in *de novo* synthesis in the mammary gland, part is obtained via the digestive tract from the feed or after conversion in the rumen or in the liver. Further, esterification of fatty acids requires 10.5 mmol ATP per 1 g fat.

When fatty acids are synthesized in the udder (i.e. *de novo* synthesis), 27 mmol ATP per gram of fat is required. Therefore, the more milk fat components are obtained as fatty acids from the blood circulation, the more energy is saved for other purposes. Short and middle-chain fatty acids are obtained only via *de novo* synthesis and the long ones (C18 and longer) are obtained only from the blood circulation. Of the milk fatty acids only palmitic acid can be produced in both ways. In view of energy economy, it has now been realised that it would be desirable to obtain more palmitic acid directly from the blood circulation.

### (6) Composition of milk fat

The composition of milk fat usually differs remarkably from the fat composition of the feed. Rumen hydrolysis as well as hydrogenation partly influence this change. Also *de novo* synthesis from acetate takes place in the mammary gland and affects the composition of milk fat.

In the liver, mostly the longer fatty acids, and also palmitic acid, are synthesized. In the udder on the other hand, mainly the short chain fatty acids, but also palmitic acid, are synthesized. A high concentration of ≥ C18 in the diet may lower fatty acid synthesis.

It has now been surprisingly found that by a certain type of feed it is possible to energetically efficiently increase the proportion of milk fat derived from the feed, whereby energy is saved in the mammary gland for the synthesis of protein and lactose, and thereby milk production is increased. The most abundant fatty acid in milk is palmitic acid which can be obtained from both the blood circulation and via *de novo* synthesis. By using the feed according to the invention it is possible to transfer palmitic acid from the feed via the digestive tract into the blood circulation.

### Detailed description of the invention

The present invention is directed to a ruminant compound feed according to the appended claims, which in addition to conventional feed raw materials contains inside and on the surface of the feed raw material particles a fatty acid mixture wherein the content of saturated free fatty acids is at least 90 %, and the total amount of the fatty acid mixture in the feed is higher than 10 % by weight.

The invention is also directed to a process for preparing said feed, to a method for increasing milk production of a lactating animal and for increasing concentrations of protein and fat in milk, all methods being according to the appended claims. Conventional feed raw materials include common protein, carbohydrate and/or fat containing materials used in feeds. Said protein, carbohydrate and/or fat containing raw materials comprise for example grains, peas, beans, molasses and vegetable oilseed crushes or meals. In addition to protein, carbohydrate and fat containing raw materials the feed according to the invention may contain also other raw materials, such as minerals, additives and/or auxiliary agents. Additives include e.g. micronutrients and vitamins. Examples of auxiliary agents include pelletizing agents, such as lignin sulphates and/or colloidal clay. Preferably a mixture of at least two of the protein, carbohydrate and/or fat containing raw materials is used. The protein content of the mixture is preferably 0.1-55 % by weight, more preferably 5-45 % by weight, most preferably 8-40 % by weight. The protein content can be measured e.g. by using Kjeldahl N (nitrogen) analysis method. The starch content of the mixture is preferably 0.1-50 % by weight, more preferably 5-40 % by weight, more preferably 5-35 % by weight and most preferably 5-20 % by weight. The starch content can be measured e.g. by the method of AACCI 76-13.01.

Within this disclosure, ruminants or ruminant animals include lactating animals such as for example cattle, goats and sheep. Dairy cows are preferred.

In a preferred embodiment, the content of saturated free fatty acids in the fatty acid mixture is at least 95%, preferably at least 97%, more preferably at least 98 %, even more preferably 99%, and most preferably 100%. A preferred fatty acid is palmitic acid. According to the invention the fatty acid mixture consists essentially of free palmitic acid (i.e. it is essentially pure). When the fatty acid mixture consists essentially of palmitic acid, it means that said mixture contains at least 90%, 95%, 98%, or at least 99% palmitic acid.

The feed according to the invention preferably does not contain a high amount of fatty acid salts, such as calcium salt, because of their negative effect on milk production. Preferably there is at most 1 %, more preferably at most 0.5%, still more preferably at most 0.1%, even more preferably at most 0.02% by weight fatty acid salts of the feed and most preferably there are no fatty acids as salts present in the feed.

The feed according to the invention preferably does not contain a high amount of triglycerides. Preferably there is at most 7 %, more preferably at most 5 %, still more preferably at most 3 %, even more preferably at most 1 % triglycerides by weight of the feed.

The fatty acid mixture preferably has a iodine value of at most 4, more preferably at most 2, even more preferably at most 1.5 and most preferably ≤ 1. The melting point of the fatty acid mixture is at least 60°C, preferably at least 62°C, and most preferably about 63°C.

The total amount of the fatty acid mixture in the feed depends naturally on the feed type but it is above 10 % by weight, such as at least 10.1 %, 10.5 % or 11.0 %, and may vary between above 10 % and below 50 % by weight. This amount is preferably at least 11 %, more preferably at least 12 % and most preferably at least 15 %, and preferably at most 35 %, more preferably at most 30 %, and most preferably at most 25 % by weight. If the feed is an energy concentrate feed the preferred total amount of the fatty acid mixture is 15-25 %, preferably about 20 % by weight The preferred amount of the fatty acid mixture in a mineral concentrate feed is 25-35 %, preferably about 30 % by weight. In an amino acid concentrate feed the total amount of the fatty acid mixture is preferably over 10 % but at most 20% or below 20 %, for example 11-19% or about 15 %. In a protein concentrate feed the preferred total amount of the fatty acid mixture is 10.5-20% by weight.

The feed according to the invention preferably does not contain other saturated free fatty acids than those that are derived from the added fatty acid mixture or it contains them at most 5%, preferably at most 1%, more preferably at most 0.5%, even more preferably at most 0.1% by weight of the feed. The proportion of palmitic acid of the free saturated fatty acids in the feed according to the invention is preferably at least 90%, preferably at least 95%, more preferably 97%, even more preferably 98 %, and most preferably at least 99%.

The feed according to the invention produces glucose, palmitic acid and amino acids to the cow's metabolic system. Preferably the feed also enhances mitochondrial function. The feed according to the invention also improves the degree of energy utilization in the milk production process of ruminants. When the utilization of energy is improved, milk production i.e. milk yield increases and the concentration of fat in milk rises. Especially the feed intensifies fat synthesis in the mammary gland by bringing the main component of milk fat for use in the cells and thus there is no need to synthesize it and thereby energy is saved. Thus the limiting glucose can be utilized more effectively in lactose production whereby milk production increases. Preferably the milk protein concentration increases. The milk protein content is increased when there is no need to produce glucose from amino acids which are also obtained directly from the feed. When there is no need for the cow to lose weight at the beginning of the lactation season, fertility problems are decreased.

It has now been found that when animals, in addition to the acetate formed in the rumen, obtain ATP energy also via the acetate oxidized from palmitic acid, preferably glucose from a glucogenic feed and amino acids from proteinaceous feed, both the amount of milk and its protein and fat contents can be increased. It is essential for the purposes of the invention that palmitic acid is obtained from such a source of fat and in such a way that it does not disturb the rumen, worsen the digestibility of roughage and decrease eating (feed intake). This is achieved for the first time with the feed according to the present invention.

The feed according to the invention preferably contains at least one emulsifier. Emulsifiers which have both emulsifying and pelletizing effects are preferred. Preferably the emulsifiers are selected from the group consisting of nonionic emulsifiers. The HLB value of the emulsifier is preferably at least 5, more preferably at least 7. Preferably it is at most 14. Castor oil based emulsifiers may be mentioned as examples of preferred emulsifiers. The amount of emulsifier used in the feed according to the invention is 0.01-2 %, preferably 0.02-1 %, more preferably 0.02-0.5%, even more preferably 0.05-0.06 % by weight of the feed. The amount of emulsifier by the weight of the fatty acid mixture is 0.2-2.0 %, preferably 0.5-1.5 %, most preferably 0.8-1.2 %.

It has now been realized that the feed according to the invention containing a fatty acid mixture with at least 90% palmitic acid and a suitable emulsifier processed in a suitable way according to the invention improves milk yield, increases milk fat content (% by weight) and preferable also milk protein content (% by weight).

Preferably this feed further contains one or more selected from the group consisting of glucogenic precursor (such as for example propylene glycol, glycerol, salts of propionate, and combinations thereof), amino acids (such as for example selected from the group consisting of the essential amino acids methionine, lysine and histidine) and/or components which enhance mitocondrial function (such as for example components selected from the group consisting of carnitine, biotin, other B vitamins and omega-3-fatty acids), more preferably selected from glucogenic precursor(s) and/or component(s) which enhance mitocondrial function, and most preferably glucogenic precursor(s).

A surprisingly large increase in milk production was obtained especially when cows were fed a feed according to the invention which contained a combination of palmitic acid, an emulsifier, a glucogenic precursor, amino acids and certain components which intensify cell level function (i.e. mitochondria function enhancing components). The "correct" addition of palmitic acid in feed together with suitable feed components improved energy efficiency of ruminant feeding and feed utilization. A preferred feed according to the present invention contains palmitic acid that is completely inert in the rumen and the utilization of which in the cows' metabolic system is effected or sur-pricingly improved by the preparation process and suitable components of the feed. Consequently, in a preferred embodiment the feed according to the invention comprises glucogenic precursor(s). The glucogenic precursor(s) are preferably selected from the group consisting of propylene glycol, glycerol, salts of propionate, and combinations thereof. The amount of the glucogenic precursor(s) in the feed according to the invention is 1-20%, preferably 5-15% by weight of the feed.

Further, the feed according to the invention may also contain added amino acids. The added amino acids are preferably selected from the group consisting of the essential amino acids methionine, lysine and histidine. The amount of each one of the added amino acids in the feed according to the invention is 0.1-2%, preferably 0.5-1 % by weight of the feed.

In a further embodiment, the feed according to the invention comprises added components that enhance the function of mitochondria. Preferably such mitochondrial function enhancing components are selected from the group consisting of carnitine, biotin, other B vitamins, omega-3-fatty acids, ubiquinone and combinations thereof. The amount of the mitochondrial function enhancing components is 0.5-5%, preferably 1-3% by weight of the feed.

The feed according to the invention is a compound feed (industrially produced mixed feed) intended for feeding of a lactating animal. As examples may be mentioned complete feeds (compound feed containing all main nutrients except nutrients obtained from roughage) and concentrate feeds, such as protein concentrate feeds, mineral concentrate feeds, energy concentrate feeds and amino acid concentrate feeds, among which energy concentrate feeds, amino acid concentrate feeds and mineral concentrate feeds are preferred. By "concentrate feed" is meant a compound feed which has a high concentration of certain substances. The concentrate feed needs to be used in combination with other feed (e.g. grains). The concentrate feed according to the invention however preferably includes more nutrients than conventional supplements.

Preferably the complete feed according to the invention contains 15-50 % by weight, more preferably 16-40 % by weight, most preferably 17-35 % by weight of protein and/or amino acids and/or peptides. This amount includes mainly proteins, but also peptides and small amounts of free amino acids of the feed may be included. The amino acid and/or protein and/or peptide content can be measured e.g. by using Kjeldahl N (nitrogen) analysis method. A typical amino acid concentrate feed or protein concentrate feed according to the invention contains 20-40 % by weight, preferably 24-35 % by weight of amino acids and/or protein. A typical mineral concentrate feed according to the invention contains less than 25 % by weight, preferably less than 20 % by weight of amino acids and/or protein. A typical energy concentrate feed according to the invention contains 5 - 50 % by weight, preferably 8 -40 % by weight of amino acids and/or protein.

Preferably the complete feed according to the invention contains 4-50 % by weight, more preferably 6-45 % by weight, more preferably 8-40 % by weight and most preferably 12-35% by weight of starch. The starch content can be measured e.g. by the method AACCI 76-13.01. A typical amino acid concentrate feed or protein concentrate feed according to the invention contains preferably 1-30 % by weight, preferably 5-20 % by weight of starch. A typical mineral concentrate feed according to the invention contains less than 20 % by weight, preferably less than 15 % by weight of starch. A typical energy concentrate feed according to the invention contains 5 - 50 % by weight, preferably 5 -40 % by weight of starch.

A preferred feed according to the invention contains palmitic acid and an emulsifier and the feed is processed in a way that improves digestion of palmitic acid in the small intestine. The melting point of palmitic acid is 63°C and iodine value ≤1. Said fatty acid does not therefore disturb rumen function since it completely passes the rumen and does not decrease feed intake like fatty acid calcium salts or fatty acid mixtures which have a lower melting point and higher iodine value. The digestibility of low iodine value palmitic acid is poor when fed as such or just mixed with the feed without a suitable heat treatment.The efficiency can also be improved by using an emulsifier. When palmitic acid is suitably processed and absorbed by the feed particles together with an emulsifier, this feed firstly slowers fermentation of feed particles in the rumen and most importantly, has improved digestibility. In the small intestine the fatty acids absorbed by the feed particles are converted into emulgated micelles before they can be absorbed through the intestine wall. Lysolecithin of bile acids functions also as an emulsifier in the small intestine but its effect is intensified when the feed has been processed with an emulsifier.

In the process for preparing the feed according to the invention, when palmitic acid is added to a feed raw material mixture which is heated above 75°C for at least 20 minutes, the fat gradually melts and is evenly absorbed inside and on the surface of feed particles, preferably under the influence of a suitable emulsifier.

However, any heat treatment procedure that leads to a feed in which the fatty acids are evenly distributed inside and on the surface of the feed particles under the influence of a suitable emulsifier, is suitable. The treatment may be performed in a long term conditioner, in a short term conditioner, in an expander and/or in a pelletizer. The conventionally used conditions (temperature, pressure, moisture and time) in these processes are suitable. Preferably the feed is prepared in a long term conditioner or expander, and most preferably in a long term conditioner.

It is preferred according to the invention that the added fatty acid has been treated with an emulsifier in the preparation process of the feed mixture, whereupon the fatty acid mixture is evenly applied inside and on the surface of feed particles whereby utilization of nutrients is enhanced and the digestibility of fat is improved. Preferably the degree of utilization of feed is increased by 5 %, more preferably by 10 % and most preferably by 15 % when calculated as the efficiency of utilization of metabolizable energy intake for milk production (kl). Unlike several other high-fat feeds, the feed according to the invention is also palatable, even highly attractive for ruminants e.g. the cows. Therefore the feed according to the invention does not decrease feed intake compared to a feed which does not contain added fats (the fat percentage of a feed which does not contain added fats is typically 2-4 % by weight).

In a preferred embodiment, the feed according to the invention is an energy concentrate feed or a mineral concentrate feed, which contains in addition to palmitic acid an emulsifier and as a glucose source either propylene glycol, glycerol or salts of propionic acid (sodium, calcium) or their combinations. Said energy concentrate feed or mineral concentrate feed may also contain small amounts of mitochondrial function enhancing components, such as carnitine, biotin, other B vitamins, omega-3 fatty acids, ubiquinone, and combinations thereof. These concentrate feeds may also contain added amino acids. A preferred amount of palmitic acid in an energy concentrate feed is between 15-25 %, preferably about 20 %. In a preferred mineral concentrate feed according to the invention the amount of palmitic acid is between 25-35 %, preferably about 30 %.

In a further preferred embodiment the feed according to the invention is an amino acid concentrate feed which contains in addition to palmitic acid, an emulsifier, and glucose sources (preferably a glucogenic precursor) and also amino acids. The nutrients in the feed are utilized more effectively only after the cell level energy metabolism has been intensified with the aid of palmitic acid. As added amino acids can preferably *i.a.* methionine, lysine or histidine or their combinations can be used. In a further preferred embodiment the amino acid concentrate feed according to the invention also contains components enhancing mitochondrial function, especially as regards beta oxidation and fat synthesis. Such components include for example carnitine, biotin, other B vitamins, omega-3 fatty acids, ubiquinone, and combinations thereof. A preferred amount of palmitic acid in an amino acid concentrate feed is between 10-20 %, preferably about 15 %.

The feed according to the invention can provide the animal a daily amount of the fatty acid mixture disclosed herein, which amount is 0.2-1.0 kg/day, preferably between 0.3-0.8 kg/day, and most preferably between 0.4-0.7 kg/day. Typically the daily amount of the fatty acid mixture is at least 0.2 kg/day, preferably at least 0.3 kg/day, more preferably at least 0.4 kg/day, and most preferably at least 0.5 kg/day. The useful effects disclosed herein also seem to be dose respondent within the preferred amounts. The dosing can also be expressed as amount of fatty acid mixture ingested via the feed according to the invention per amount of produced milk. Suitable dosages are e.g. 10-300 g fatty acid mixture/10 kg milk, more preferably 60-160 g fatty acid mixture/10 kg milk, and most preferably about 100 g fatty acid mixture/10 kg milk. These daily amounts or amounts per 10 kg milk production can suitably be applied in any method or use disclosed here below. Preferably the daily amounts disclosed above are the amounts of free palmitic acid.

In order to assure a relevant increase in milk production, in milk fat content as well as in milk protein content, the diet of the animal needs to deliver enough of glucose (a glucose source and/or a glucogenous precursor, which the animal metabolizes to glucose), enough of amino acids (especially all the essential amino acids) and further, one needs to follow the feeding recommendations given. However, the effect of the feed according to the invention may not be seen so clearly if used in combination with a very high quality silage or with early summer pasture.

The invention is also directed to a method for increasing milk production (i.e. milk yield) of a lactating animal and for increasing the concentrations of protein and fat in milk. The method comprises feeding to said animal the feed according to the invention in amounts which, depending on the feed type, correspond to the normal feeding recommendations of said feed type. Further disclosed is a method for increasing milk fat content and for increasing milk production, wherein a milk fat increasing amount of a feed according to the invention is given to a lactating animal. Further disclosed is a method of increasing the milk protein content, in which a milk protein increasing amount of a feed according to the invention is given to a lactating animal. Further disclosed is a milk preparation process in which the feed according to the invention is fed to a lactating animal and the milk produced by the animal is recovered.

A further object of the invention is the use of palmitic acid for preparing a ruminant feed according to the claims wherein the content of added palmitic acid is higher than 10 % by weight and wherein said palmitic acid has during the preparation process of said feed been applied inside and on the surface of feed raw material particles.

A still further object of the invention is the use of palmitic acid for increasing milk production of a lactating animal and for increasing concentrations of protein and fat in milk, wherein to a lactating animal is given one or more feeds according to the claims which provide said animal with a daily amount of palmitic acid which is 0.2-1 kg/day, preferably between 0.3-0.8 kg/day, and most preferably between 0.4-0.7 kg/day. Typically the daily amount of palmitic acid is at least 0.2 kg/day, preferably at least 0.3 kg/day, more preferably at least 0.4 kg/day, and most preferably at least 0.5 kg/day.

Preferably in the uses according to the invention the feeds are prepared using at least one emulsifier. Also preferably in the uses according to the invention the palmitic acid is essentially pure as disclosed herein. Further, also all other preferred features of embodiments disclosed herein for the feeds according to the invention are applicable for the disclosed uses.

The invention is also directed to a ruminant compound feed comprising
- total lipids in an amount of 10.1-57%, preferably 10.5-45%, more preferably 10.5-40%, still more preferably 10.5-30%, even more preferably 10.5-20%, most preferably 11-14% by weight,
- free palmitic acid in an amount of 10.1%-50%, preferably 10.1-35%, more preferably 10.1-25% by weight,
- proteins in an amount of 15-50% , preferably 16-40% , more preferably 17-35% by weight,
- starch in an amount of 4-50%, preferably 6-45%, more preferably 8-40% and most preferably 12-35% by weight, and
- an emulsifier, and
wherein the amount of free palmitic acid is at least 40%, preferably at least 45%, more preferably at least 50%, still more preferably at least 55%, even more preferably at least 60%, further more preferably at least 65%, still further more preferably at least 70%, even further more preferably at least 75%, still even further more preferably at least 80%, even still further more preferably at least 85%, and most preferably at least 90% by weight of the total lipids.

Preferably the emulsifier is a non-ionic emulsifier. It preferably has a HLB value of at least 5, more preferably at least 7. Preferably it is at most 14. Preferably the emulsifier is a castor oil based emulsifier. The emulsifier is preferably added in an amount of 0.01-2.0%, preferably 0.02-1.0%, still more preferably 0.02-0.5%, most preferably 0.02-0.06% by weight of the feed.

Preferably the ruminant compound feed is a complete feed. It is preferably non-extruded. It is generally in the form of pellets or granulas.

Preferably the ruminant compound feed further comprises at least one component selected from the group consisting of a glucogenic precursor, preferably in an amount of 1-20%, more preferably 5-15% by weight; a mitochondrial function enhancing component, preferably in an amount of 0.5-5%, more preferably 1-3% by weight; and amino acids, preferably in an amount of 0.1-6%, more preferably 1.5-3% by weight. The ruminant compound feed is obtainable by adding a fatty acid mixture comprising at least 90% palmitic acid to conventional feed raw materials.

Embodiments of the invention are described in the appended claims. The following examples illustrate the invention without limiting the same.

### Example 1. Preparation of a feed

Starting materials are feed components which are mixed with a fatty acid mixture containing at least 90 % of palmitic acid. The melting point of the fatty acid mixture has to be at least 60 °C and the iodine value at the highest 4. The fatty acid mixture is mixed in a blender with the other feed components (raw materials) for 3 minutes, an emulsifier is added, and the emulsifier and the fatty acids are melted among the feed mass in a long term conditioner for about 20 minutes at a temperature of at least about 75 °C and at most about 85 °C, in order for the fatty acid mixture to slowly melt and spread with the help of the emulsifier evenly inside and on the surface of the feed particles. Then the feed mass is pelletized and cooled. Thus the whole feed mixture is treated with the molten fatty acid and emulsifier and therefore at least partly protected from microbial degradation in the rumen.

By using the feed described above, more digestible nutrients can be brought to the cow's small intestine. Especially the high amount of palmitic acid in bioavailable form enables positive changes in milk production as well as in milk composition and in feed utilization.

### Example 2. Feed

The following compositions are examples of feed compositions that increases blood glucose and blood palmitic acid supply for the mammary gland.

| | 1 | 2 | 3 |
|---|---|---|---|
| Feed grain (wheat, barley, oats) | 0-50 | 10-40 | 20-30 |
| Sugar beet pulp | 0-30 | 5-25 | 10-20 |
| Wheat bran | 0-30 | 5-25 | 10-20 |
| Molasses | 0-8 | 1-5 | 1-3 |
| Protein crush (rapeseed, soya) | 0-50 | 10-40 | 20-30 |
| Wheat middlings | 0-20 | 5-15 | 8-12 |
| Minerals | 0-5 | 1-4 | 2-3 |
| Premixes (vitamins, mineral nutrients) | 0-2 | 0.5-1.5 | 0.8-1.2 |
| Propylene glycol | 1-15 | 4-14 | 8-12 |
| Glycerol/Sodium propionate | 0-5 | 1-4 | 2-3 |
| Amino acid mixture | 0-2 | 0.1-1.5 | 0.3-0.9 |
| B vitamin mixture | 0-2 | 0.5-1.5 | 0.8-1.2 |
| Carnitine | 0-1 | 0.1-0.8 | 0.2-0.6 |
| Palmitic acid (purity 98%) | 10.1-30 | 12-25 | 15-22 |
| Emulsifier (non-ionic) | 0.02-2 | 0.03-1 | 0.05-0.5 |

### Example of the fatty acid composition of the added fat:

| | | preferably | more preferably |
|---|---|---|---|
| C16:0 | 90-100 | 95-100 | 98-100 |
| C18:0 | 0-10 | 0-5 | 0-2 |

| | | | |
|---|---|---|---|
| C18:1 | 0-5 | 0-2 | 0-1 |
| others | 0-5 | 0-2 | 0-1 |
| Melting point | 60-65 °C | | |
| Iodine value | 0-4 | 0-3 | 0-1 |
| Total trans | 0 | | |

### Example 3. Feeding experiment

A feeding experiment was performed where 1-3 kg of a conventional complete feed was replaced by a feed according to the invention. The experiment was continued for two months.

The composition of the feed according to the invention in the feeding experiment (% by weight):

| | |
|---|---|
| Sugar beet pulp | 20 |
| Barley | 20 |
| Palmitic acid (98%) | 20 |
| Wheat bran | 14 |
| Oat bran | 10 |
| Propylene glycol | 10 |
| Molasses | 2 |
| Sodium bicarbonate | 2 |
| Biotin | 1 |
| Carnitine premix | 0.4 |
| Methionine premix | 0.5 |
| Emulsifier (non-ionic) | 0.1 |

### Results:

| | Reference | Test feed |
|---|---|---|
| Milk kg/d | 29.5 | 32.5 |
| Fat % by weight | 3.98 | 4.43 |
| Protein % by weight | 3.15 | 3.37 |

The results show that the milk production as well as fat and protein concentrations increased significantly.

In addition, the degree of feed utilization, measured as the efficiency of utilization of metabolizable energy intake for milk production (kl), was significantly improved.

## Claims

1. A ruminant compound feed, **characterized in that** in addition to conventional feed raw materials, which include protein, carbohydrate and fat containing materials, the feed contains inside and on the surface of feed raw material particles a fatty acid mixture wherein the content of free palmitic acid is at least 90 % and the total amount of the fatty acid mixture in said ruminant feed is higher than 10 % by weight.

2. The ruminant compound feed according to claim 1, **characterized in that** the fatty acid mixture has a iodine value of at most 4, preferably at most 2, more preferably at most 1.5 and most preferably ≤ 1.

3. The ruminant compound feed according to claim 1 or 2, **characterized in that** the total amount of the fatty acid mixture in the feed is 10.1-50%.

4. The ruminant compound feed according to any one of claims 1-3, **characterized in that** it further comprises glucogenic precursor(s) and/or added amino acids and/or added component(s) that enhance the function of mitochondria and/or at least one emulsifier, preferably selected from the group consisting of nonionic emulsifiers.

5. The ruminant compound feed according to any one of claims 1-4, **characterized in that** it is an energy concentrate feed, which comprises 15-25 % palmitic acid, at least one emulsifier and at least one glucogenic precursor.

6. The ruminant compound feed according to any one of claims 1-5, **characterized in that** it is a mineral concentrate feed, which comprises 25-35 % palmitic acid, at least one emulsifier and at least one glucogenic precursor.

7. The ruminant compound feed according to any one of claims 1-6, **characterized in that** it is an amino acid concentrate feed, which comprises 10.1-20 % palmitic acid, at least one emulsifier, at least one glucogenic precursor and added amino acids.

8. The ruminant compound feed according to any one of claims 1-7, **characterized in that** it is a protein concentrate feed, which comprises 10.1-20 % palmitic acid, at least one emulsifier, at least one glucogenic precursor and added amino acids.

9. A ruminant compound feed according to claim 1, comprising
- total lipids in an amount of 10.1-57%, preferably 10.5-45%, more preferably 10.5-40%, still more preferably 10.5-30%, even more preferably 10.5-20%, most preferably 11-14% by weight,
- free palmitic acid in an amount of 10.1%-50%, preferably 10.1-35%, more preferably 10.1-25% by weight,
- proteins in an amount of 15-50% , preferably 16-40% , more preferably 17-35% by weight,
- starch in an amount of 4-50%, preferably 6-45%, more preferably 8-40% and most preferably 12-35% by weight, and
- an emulsifier, and
wherein the amount of free palmitic acid is at least 40%, preferably at least 45%, more preferably at least 50%, still more preferably at least 55%, even more preferably at least 60%, further more preferably at least 65%, still further more preferably at least 70%, even further more preferably at least 75%, still even further more preferably at least 80%, even still further more preferably at least 85%, and most preferably at least 90% by weight of the total lipids.

10. The ruminant compound feed according to claim 9, wherein the emulsifier is a non-ionic emulsifier, more preferably it has a HLB value of at least 5, preferably at least 7, more preferably at most 14, still more preferably it is a castor oil based emulsifier and most preferably the amount of emulsifier in the feed is 0.01-2.0%, preferably 0.02-1.0%, still more preferably 0.02-0.5%, most preferably 0.02-0.06% by weight.

11. The ruminant compound feed according to claim 9 or 10, wherein the feed is a complete feed, preferably it is non-extruded and/or in the form of pellets or granulas.

12. The ruminant compound feed according to any one of claims 9 to 11, wherein the feed further comprises at least one component selected from the group consisting of a glucogenic precursor, preferably in an amount of 1-20%, more preferably 5-15% by weight; a mitochondrial function enhancing component, preferably in an amount of 0.5-5%, more preferably 1-3% by weight; and amino acids, preferably in an amount of 0.1-6%, preferably, 1.5-3% by weight.

13. The ruminant compound feed according to any one of claims 9 to 12 obtainable by adding a fatty acid mixture comprising at least 90% palmitic acid to conventional feed raw materials.

14. A process for preparing the ruminant compound feed according to any one of claims 1-8, **characterized in that** among conventional feed raw materials, which include protein, carbohydrate and fat containing materials, is added with simultaneous mixing a fatty acid mixture wherein the content of free palmitic acid is at least 90%, the total amount of the fatty acid mixture in the feed being higher than 10% by weight, the feed mixture is heated so that the fatty acid mixture melts and spreads inside and on the surface of the raw material particles of the feed, and the mixture is optionally pelletized, and cooled.

15. A method for increasing milk production of a lactating animal and for increasing concentrations of protein and fat in milk, **characterized in that** to said animal is given the ruminant compound feed according to any one of claims 1-13.

16. Use of palmitic acid for preparing a ruminant compound feed according to any one of claims 1 to 13, wherein the content of added palmitic acid is higher than 10 % by weight and wherein said palmitic acid has during the preparation process of said ruminant compound feed been applied inside and on the surface of feed raw material particles.

17. Use of palmitic acid for increasing milk production of a lactating animal and for increasing concentrations of protein and fat in milk, wherein to a lactating animal is given one or more ruminant compound feeds according to any one of claims 1 to 13, which provide said animal with a daily amount of palmitic acid which is 0.2-1 kg/day, preferably between 0.3-0.8 kg/day.

## Patentansprüche

1. Wiederkäuermischfutter, **dadurch gekennzeichnet, dass** zusätzlich zu herkömmlichen Futterrohstoffen, die Protein, Kohlenhydrat und Fett enthaltende Materialien enthalten, das Futter innen und auf der Oberfläche von Futterrohstoffteilchen ein Fettsäuregemisch enthält, wobei der Gehalt an freier Palmitinsäure mindestens 90 % ist und die Gesamtmenge von dem Fettsäuregemisch in dem Wiederkäuerfutter höher als 10 Gew.-% ist.

2. Wiederkäuermischfutter nach Anspruch 1, **dadurch gekennzeichnet, dass** das Fettsäuregemisch einen lodwert von höchstens 4, vorzugsweise höchstens 2, bevorzugter höchstens 1,5 und besonders bevorzugt ≤ 1 aufweist.

3. Wiederkäuermischfutter nach Anspruch 1 oder 2, **dadurch gekennzeichnet, dass** die Gesamtmenge von dem Fettsäuregemisch in dem Futter 10,1-50 % ist.

4. Wiederkäuermischfutter nach einem der Ansprüche 1-3, **dadurch gekennzeichnet, dass** es weiter glucogene Vorstufe(n) und/oder zugegebene Aminosäuren und/oder zugegebene Komponente(n) umfasst, die die Funktion von Mitochondrien und/oder mindestens einem Emulgator steigern, vorzugsweise ausgewählt aus der Gruppe, bestehend aus nichtionischen Emulgatoren.

5. Wiederkäuermischfutter nach einem der Ansprüche 1-4, **dadurch gekennzeichnet, dass** es ein Energiekonzentratfutter ist, das 15-25 % Palmitinsäure, mindestens einen Emulgator und mindestens eine glucogene Vorstufe umfasst.

6. Wiederkäuermischfutter nach einem der Ansprüche 1-5, **dadurch gekennzeichnet, dass** es ein Mineralkonzentratfutter ist, das 25-35 % Palmitinsäure, mindestens einen Emulgator und mindestens eine glucogene Vorstufe umfasst.

7. Wiederkäuermischfutter nach einem der Ansprüche 1-6, **dadurch gekennzeichnet, dass** es ein Aminosäurekonzentratfutter ist, das 10,1-20 % Palmitinsäure, mindestens einen Emulgator, mindestens eine glucogene Vorstufe und zugegebene Aminosäuren umfasst.

8. Wiederkäuermischfutter nach einem der Ansprüche 1-7, **dadurch gekennzeichnet, dass** es ein Proteinkonzentratfutter ist, das 10,1-20 % Palmitinsäure, mindestens einen Emulgator, mindestens eine glucogene Vorstufe und zugegebene Aminosäuren umfasst.

9. Wiederkäuermischfutter nach Anspruch 1, umfassend
- Gesamtlipide in einer Menge von 10,1-57 %, vorzugsweise 10,5-45 %, bevorzugter 10,5-40 %, noch bevorzugter 10,5-30 %, auch bevorzugter 10,5-20 %, besonders bevorzugt 11-14 Gew.-%,
- freie Palmitinsäure in einer Menge von 10,1 %-50 %, vorzugsweise 10,1-35 %, bevorzugter 10,1-25 Gew.-%,
- Proteine in einer Menge von 15-50 %, vorzugsweise 16-40 %, bevorzugter 17-35 Gew.-%,
- Stärke in einer Menge von 4-50 %, vorzugsweise 6-45 %, bevorzugter 8-40 % und besonders bevorzugt 12-35 Gew.-% und
- einen Emulgator, und
wobei die Menge an freier Palmitinsäure mindestens 40 %, vorzugsweise mindestens 45 %, bevorzugter mindestens 50 %, noch bevorzugter mindestens 55 %, auch bevorzugter mindestens 60 %, weiter bevorzugter mindestens 65 %, noch weiter bevorzugter mindestens 70 %, ebenfalls weiter bevorzugter mindestens 75 %, noch ebenfalls weiter bevorzugter mindestens 80 %, ebenfalls noch weiter bevorzugter mindestens 85 % und besonders bevorzugt mindestens 90 % auf das Gewicht der Gesamtlipide ist.

10. Wiederkäuermischfutter nach Anspruch 9, wobei der Emulgator ein nichtionischer Emulgator ist, bevorzugter weist er einen HLB-Wert von mindestens 5, vorzugsweise mindestens 7, bevorzugter höchstens 14 auf, noch bevorzugter ist er ein Rizinusöl-basierter Emulgator und besonders bevorzugt ist die Menge an Emulgator in dem Futter 0,01-2,0 %, vorzugsweise 0,02-1,0 %, noch bevorzugter 0,02-0,5 %, besonders bevorzugt 0,02-0,06 Gew.-%.

11. Wiederkäuermischfutter nach Anspruch 9 oder 10, wobei das Futter ein Alleinfutter ist, vorzugsweise ist es nicht-extrudiert und/oder in Form von Pellets oder Granulen.

12. Wiederkäuermischfutter nach einem der Ansprüche 9 bis 11, wobei das Futter weiter mindestens eine Komponente, ausgewählt aus der Gruppe, bestehend aus einer glucogene Vorstufe, vorzugsweise in einer Menge von 1-20 %, bevorzugter 5-15 Gew.-%; eine Mitochondrienfunktions-verstärkende Komponente, vorzugsweise in einer Menge von 0,5-5 %, bevorzugter 1-3 Gew.-%; und Aminosäuren, vorzugsweise in einer Menge von 0,1-6 %, vorzugsweise 1,5-3 Gew.-% umfasst.

13. Wiederkäuermischfutter nach einem der Ansprüche 9 bis 12, erhältlich durch Zusetzen eines Fettsäuregemisches, umfassend mindestens 90 % Palmitinsäure zu herkömmlichen Futterrohstoffen.

14. Verfahren zur Herstellung des Wiederkäuermischfutters nach einem der Ansprüche 1-8, **dadurch gekennzeichnet, dass** unter herkömmlichen Futterrohstoffen, die Protein, Kohlenhydrat und Fett enthaltende Materialien enthalten, bei gleichzeitigem Mischen ein Fettsäuregemisch zugegeben wird, wobei der Gehalt an freier Palmitinsäure mindestens 90 % ist, die Gesamtmenge von dem Fettsäuregemisch in dem Futter höher als 10 Gew.-% ist, das Futtergemisch so erwärmt wird, dass das Fettsäuregemisch schmilzt und sich innen und auf der Oberfläche der Rohstoffteilchen des Futters ausbreitet, und das Gemisch gegebenenfalls pelletiert und gekühlt wird.

15. Verfahren zur Steigerung der Milch-Produktion von einem laktierenden Tier und zur Steigerung der Konzentrationen an Protein und Fett in der Milch, **dadurch gekennzeichnet, dass** dem Tier Wiederkäuermischfutter nach einem der Ansprüche 1-13 gegeben wird.

16. Verwendung von Palmitinsäure zur Herstellung eines Wiederkäuermischfutters nach einem der Ansprüche 1 bis 13, wobei der Gehalt an zugegebener Palmitinsäure höher als 10 Gew.-% ist und wobei die Palmitinsäure während des HerstellungsVerfahrens von dem Wiederkäuermischfutter innen und auf der Oberfläche von Futterrohstoffteilchen aufgetragen wurde.

17. Verwendung von Palmitinsäure zur Steigerung der Milch-Produktion von einem laktierenden Tier und zur Steigerung der Konzentrationen an Protein und Fett in der Milch, wobei einem laktierenden Tier ein oder mehrere Wiederkäuermischfutter nach einem der Ansprüche 1 bis 13 gegeben wird, was das Tier mit einer täglichen Menge an Palmitinsäure versorgt, die 0,2-1 kg/Tag, vorzugsweise zwischen 0,3-0,8 kg/Tag ist.

## Revendications

1. Aliment composé pour ruminants, **caractérisé en ce qu'**en plus des matières premières conventionnelles de l'aliment, qui incluent des matériaux contenant des protéines, des glucides et des graisses, l'aliment contient à l'intérieur et à la surface des particules de matières premières de l'aliment un mélange d'acides gras dans lequel la teneur en acide palmitique libre est d'au moins 90% et la quantité totale de mélange d'acides gras dans ledit aliment pour ruminants est supérieure à 10% en poids.

2. Aliment composé pour ruminants selon la revendication 1, **caractérisé en ce que** le mélange d'acides gras présente une valeur d'iode d'au plus 4, de préférence d'au plus 2, plus préférablement d'au plus 1,5 et de manière très préférentielle ≤ 1.

3. Aliment composé pour ruminants selon la revendication 1 ou 2, **caractérisé en ce que** la quantité totale du mélange d'acides gras dans l'aliment est de 10,1 à 50%.

4. Aliment composé pour ruminants selon l'une quelconque des revendications 1 à 3, **caractérisé en ce qu'**il comprend en outre un ou plusieurs précurseur(s) glucogénique(s) et/ou des acides aminés ajoutés et/ou un ou plusieurs composants ajoutés qui renforcent la fonction des mitochondries et/ou au moins un émulsifiant, de préférence choisi dans le groupe constitué par des émulsifiants non ioniques.

5. Aliment composé pour ruminants selon l'une quelconque des revendications 1 à 4, **caractérisé en ce qu'**il s'agit d'un aliment de concentré énergétique, qui comprend de 15 à 25% d'acide palmitique, au moins un émulsifiant et au moins un précurseur glucogénique.

6. Aliment composé pour ruminants selon l'une quelconque des revendications 1 à 5, **caractérisé en ce qu'**il s'agit d'un aliment de concentré de minéraux, qui comprend de 25 à 35% d'acide palmitique, au moins un émulsifiant et au moins un précurseur glucogénique.

7. Aliment composé pour ruminants selon l'une quelconque des revendications 1 à 6, **caractérisé en ce qu'**il s'agit d'un aliment de concentré d'acides aminés, qui comprend de 10,1 à 20% d'acide palmitique, au moins un émulsifiant, au moins un précurseur glucogénique et des acides aminés ajoutés.

8. Aliment composé pour ruminants selon l'une quelconque des revendications 1 à 7, **caractérisé en ce qu'**il s'agit d'un aliment de concentré protéique qui comprend de 10,1 à 20% d'acide palmitique, au moins un émulsifiant, au moins un précurseur glucogénique et des acides aminés ajoutés.

9. Aliment composé pour ruminants selon la revendication 1, comprenant
- des lipides totaux en une quantité de 10,1 à 57%, de préférence de 10,5 à 45%, plus préférablement de 10,5 à 40%, encore plus préférablement de 10,5 à 30%, toujours plus préférablement de 10,5 à 20%, de manière très préférentielle de 11 à 14 % en poids
- de l'acide palmitique libre en une quantité de 10,1% à 50%, de préférence de 10,1 à 35%, plus préférablement de 10,1 à 25% en poids,
- des protéines en une quantité de 15 à 50%, de préférence de 16 à 40%, plus préférablement de 17 à 35% en poids,
- de l'amidon en une quantité de 4 à 50%, de préférence de 6 à 45%, plus préférablement de 8 à 40% et de manière très préférentielle de 12 à 35% en poids, et
- un émulsifiant, et
dans lequel la quantité d'acide palmitique libre est au moins de 40%, de préférence au moins de 45%, plus préférentiellement au moins de 50%, encore plus préférentiellement au moins de 55%, encore plus préférentiellement au moins de 60%, encore plus préférentiellement au moins de 65%, encore plus préférentiellement au moins de 70%, encore plus préférentiellement au moins de 75%, encore plus préférentiellement au moins de 80%, encore plus préférentiellement encore au moins de 85%, et de manière très préférentielle au moins de 90% en poids du total lipides.

10. Aliment composé pour ruminants selon la revendication 9, dans lequel l'émulsifiant est un émulsifiant non ionique, de préférence il présente une valeur HLB d'au moins 5, de préférence d'au moins 7, plus préférablement d'au plus 14, encore plus préférentiellement il consiste en un émulsifiant à base d'huile de castor et de manière très préférentielle, la quantité d'émulsifiant dans l'aliment est de 0,01 à 2,0%, de préférence de 0,02 à 1,0%, encore plus préférablement de 0,02 à 0,5%, de manière très préférentielle de 0,02 à 0,06% en poids.

11. Aliment composé pour ruminants selon la revendication 9 ou 10, dans lequel l'aliment est un aliment complet, de préférence non extrudée et/ou sous forme de pellets ou de granules.

12. Aliment composé pour ruminants selon l'une quelconque des revendications 9 à 11, dans lequel l'aliment comprend en outre au moins un composant choisi dans le groupe constitué d'un précurseur glucogène, de préférence en une quantité de 1 à 20%, plus préférablement de 5 à 15% en poids; un composant améliorant la fonction mitochondriale, de préférence en une quantité de 0,5 à 5%, plus préférablement de 1 à 3% en poids; et des acides aminés, de préférence en une quantité de 0,1 à 6%, de préférence de 1,5 à 3% en poids.

13. Aliment composé pour ruminants selon l'une quelconque des revendications 9 à 12, pouvant être obtenu en ajoutant un mélange d'acides gras comprenant au moins 90% d'acide palmitique à des matières premières conventionnelles de l'aliment.

14. Procédé pour la préparation de l'aliment composé pour ruminants selon l'une quelconque des revendications 1 à 8, **caractérisé en ce que** parmi les matières premières conventionnelles de l'aliment, qui incluent des matériaux contenant des protéines, des glucides et des graisses, est ajouté en mélangeant simultanément un mélange d'acides gras dans lequel la teneur en acide palmitique libre est d'au moins 90%, la quantité totale du mélange d'acides gras dans l'aliment étant supérieure à 10% en poids, le mélange d'aliment est chauffé de sorte que le mélange d'acides gras fond et se répand à l'intérieur et sur la surface des particules de matière première de l'aliment, et le mélange est optionnellement granulé, et refroidi.

15. Procédé pour augmenter la production de lait d'un animal en lactation et pour augmenter les concentrations de protéines et de graisses dans le lait, **caractérisé en ce que** ledit aliment composé pour ruminants est donné à l'animal selon l'une quelconque des revendications 1 à 13.

16. Utilisation d'acide palmitique pour préparer un aliment composé pour ruminants selon l'une quelconque des revendications 1 à 13 dans laquelle la teneur en acide palmitique ajouté est supérieure à 10% en poids et dans laquelle ledit acide palmitique a été appliqué au cours du procédé pour la préparation dudit aliment composé pour ruminants à l'intérieur et à la surface des particules de matières premières de l'aliment.

17. Utilisation de l'acide palmitique pour augmenter la production de lait d'un animal allaitant et pour augmenter les concentrations de protéines et de graisses dans le lait, dans laquelle un ou plusieurs aliment(s) composé(s) pour ruminants est(sont) donné(s) à un animal allaitant selon l'une quelconque des revendications 1 à 13, qui fournit (fournissent) à cet animal une quantité quotidienne d'acide palmitique qui est de 0,2 à 1 kg/jour, de préférence entre 0,3 et 0,8 kg/jour.
